# EUROPEAN PATENT APPLICATION

(11) **EP 4 801 019 A1**
(43) Date of publication of application: **02.09.2026**
(21) Application number: 24881070.7
(22) Date of filing: 27.06.2024
(51) Int. Cl.: H04M 1/02

(54) **ELECTRONIC DEVICE AND METHOD THEREFOR, AND READABLE STORAGE MEDIUM**

(30) Priority: 23.10.2023 CN 202311381982
(71) Applicant: Huawei Technologies Co., Ltd., Shenzhen, Guangdong 518129 (CN)
(72) Inventor: JIN, Chongting, Shenzhen, Guangdong 518129 (CN); FU, Ao, Shenzhen, Guangdong 518129 (CN)
(74) Representative: Pfenning, Meinig & Partner mbB
(86) International application number: PCT/CN2024/101965
(87) International publication number: WO 2025/086694

(57) **Abstract**

Provided are an electronic device and a method therefor, and a readable storage medium. The electronic device includes a lens module, and the lens module is located on a first side surface of the electronic device; and the method includes: in a case that a retractable lens of the lens module is in an extended state when the lens module of the electronic device is in an operating state, detecting that a distance between a first object and the electronic device is less than a preset distance, and controlling the retractable lens of the lens module to switch from the extended state to a retracted state. According to the foregoing method, after a distance between the electronic device and a surrounding object is determined, if the distance is less than the preset distance (a distance threshold), that is, the surrounding object approaches the electronic device and the lens module is in the operating state, the lens module is controlled in time to exit the operating state. This can protect the retractable lens and a lens extension and retraction mechanism of the lens module from damage, increasing a service life of the lens module, and enhancing user experience.

## Description

This application claims priority to Chinese Patent Application No. 202311381982.9, filed with the China National Intellectual Property Administration on October 23, 2023 and entitled "ELECTRONIC DEVICE AND METHOD THEREFOR, AND READABLE STORAGE MEDIUM", which is incorporated herein by reference in its entirety.

### TECHNICAL FIELD

This specification relates to the field of intelligent terminal technologies, and in particular, to an electronic device and a method therefor, and a readable storage medium.

### BACKGROUND

With the development of terminal devices, an increasing quantity of users start to use the terminal devices for photographing, video shooting, and the like. To improve a photographing capability of a terminal device, the terminal device is equipped with a lens module with a retractable lens. The lens module can provide a plurality of focal lengths, allowing for photographing on scenes and objects at different distances without changing lenses, so that various photographing requirements such as landscapes, portraits, and close-ups can be met.

However, in a process in which a user uses an intelligent terminal equipped with a lens module with a retractable lens, when the lens module is in an operating state, if the user directly puts the terminal device in a pocket or handbag when the retractable lens is in an extended state (for example, the user does not close a photographing application), dust or foreign matter can enter the lens module through a gap of a lens extension and retraction mechanism, and the lens module is prone to damage. When the user places the terminal device with the retractable lens down, if the retractable lens is in an extended state, the retractable lens is directly pressed. Consequently, the lens extension and retraction mechanism is prone to damage. Therefore, a method for protecting the retractable lens in the extended state is required.

### SUMMARY

This specification provides an electronic device and a method therefor, and a readable storage medium.

According to a first aspect, this specification provides a method, applicable to an electronic device, where the electronic device includes a lens module, and the lens module is located on a first side surface of the electronic device; and the method includes:
receiving, by the electronic device, a first input when a retractable lens of the lens module is in a retracted state;
switching, in response to the first input, the retractable lens of the lens module from the retracted state to an extended state; and
when the retractable lens of the lens module is in the extended state, controlling, in response to a distance between a first object and the electronic device being less than a preset distance, the retractable lens of the lens module to switch from the extended state to the retracted state.

In this specification, the electronic device may be various electronic devices on which the lens module is mounted and that can support a photographing function. The first side surface may be a side surface of a main body of the electronic device, for example, a back surface of the body of the electronic device. That the retractable lens of the lens module is in the retracted state indicates that the retractable lens of the lens module is retracted relative to the main body of the electronic device, that is, the retractable lens retracts into the lens module on the back surface of the body. The extended state indicates that the retractable lens is extended relative to the main body of the electronic device, that is, the retractable lens extends out of the lens module.

Therefore, after a distance between the electronic device and a surrounding object (the first object) is determined, if the distance is less than the preset distance (a distance threshold), that is, the surrounding object approaches the electronic device and the lens module is in the operating state, the lens module is controlled in time to exit the operating state. This can protect the retractable lens and a lens extension and retraction mechanism of the lens module from damage, increasing a service life of the lens module, and enhancing user experience.

In a possible implementation of the first aspect, in response to the distance between the first object and the electronic device being less than the preset distance includes: in response to duration in which the distance between the first object and the electronic device is less than the preset distance exceeding preset duration.

It can be learned that, in a process of continuously detecting the distance between the first object and the electronic device, if the distance is less than the preset distance (the distance threshold), whether the duration in which the distance between the first object and the electronic device remains less than the preset distance exceeds the preset duration may be further determined based on the preset duration (a duration threshold). If the duration exceeds the preset duration, the lens module is controlled to exit the operating state and retract the retractable lens. If the duration does not exceed the preset duration, the retractable lens remains extended. Whether the duration in which the distance between the first object and the electronic device is less than the preset distance exceeds the preset duration is determined. In this way, when the lens module of the electronic device is in the operating state, the lens module can be prevented from exiting the operating state due to an accidental touch operation on the electronic device, for example, a user temporarily holds and covers the lens module, avoiding impact on normal use of the user.

In a possible implementation of the first aspect, the electronic device includes a first distance sensor, a light emission aperture of the first distance sensor is located on a decorating part of the lens module, and an orientation of the light emission aperture of the first distance sensor is the same as an orientation of a light entrance aperture of the lens module; and the method further includes: determining, by using the first distance sensor, that the distance between the first object and the electronic device is less than a first preset distance.

In this specification, the decorating part herein may include a protective cover of the lens module, an outer shell, and the like. The first distance sensor is configured on the decorating part, that is, the first distance sensor is close to the lens module. The first distance sensor can emit an optical signal and receive a returned optical signal through the light emission aperture. That the orientation of the light emission aperture of the first distance sensor is the same as the orientation of the light entrance aperture of the lens module indicates that the first distance sensor and the lens module have a same orientation. For example, if both the first distance sensor and the lens module are configured on a back surface of the body, the orientation of the first distance sensor and the orientation of the lens module are an orientation of the back surface of the body. Determining, by using the first distance sensor, that the distance between the first object and the electronic device is less than the first preset distance indicates that the first object approaches the back surface of the body of the electronic device. For example, the electronic device is placed on a desktop with the lens module down.

In a possible implementation of the first aspect, the electronic device further includes a display and a second distance sensor, an orientation of a light emission surface of the display is opposite to the orientation of the light entrance aperture of the lens module, and an orientation of a light emission aperture of the second distance sensor is the same as the orientation of the light emission surface of the display; and the method further includes: determining, by using the second distance sensor, that the distance between the first object and the electronic device is less than a second preset distance.

In this specification, the second distance sensor is configured on a display side of the electronic device. Determining, by using the second distance sensor, that the distance between the first object and the electronic device is less than the second preset distance indicates that the first object approaches the display (the front surface of the body) of the electronic device. For example, the electronic device is placed on a desktop with the display down.

According to a second aspect, this specification provides a computer-readable storage medium, including instructions, where when the instructions are executed on an electronic device, the electronic device is enabled to perform the method according to the first aspect.

According to a third aspect, this specification provides an electronic device, including:
a lens module, where the lens module includes a retractable lens;
a memory, configured to store instructions to be executed by one or more processors of the electronic device; and
a processor, one of the processors of the electronic device, configured to perform the method according to the first aspect.

In a possible implementation of the third aspect, the electronic device is a mobile phone.

### BRIEF DESCRIPTION OF DRAWINGS

FIG. 1(a) to FIG. 1(d) are diagrams of a group of scenarios in which a user uses a terminal device equipped with a lens module with a retractable lens for photographing according to this specification;
FIG. 2(a) to FIG. 2(c) are diagrams of a group of scenarios in which a user uses a terminal device equipped with a lens module and a distance sensor for photographing according to this specification;
FIG. 3(a) to FIG. 3(c) are diagrams of a group of user interfaces according to this specification;
FIG. 4 is a diagram of a structure of a terminal device according to this specification;
FIG. 5 is a block diagram of a software structure of a terminal device according to this specification; and
FIG. 6 is a schematic flowchart of a method according to this specification.

### DESCRIPTION OF EMBODIMENTS

The following clearly describes in detail technical solutions in embodiments of this specification with reference to the accompanying drawings.

It may be understood that the technical solutions in this specification are applicable to any electronic device, for example, may be applied to various electronic devices on which a camera module (lens module) is mounted and that can support a photographing function, for example, a terminal device such as a mobile phone, a tablet computer, a notebook computer, a wearable device, or an on-board device.

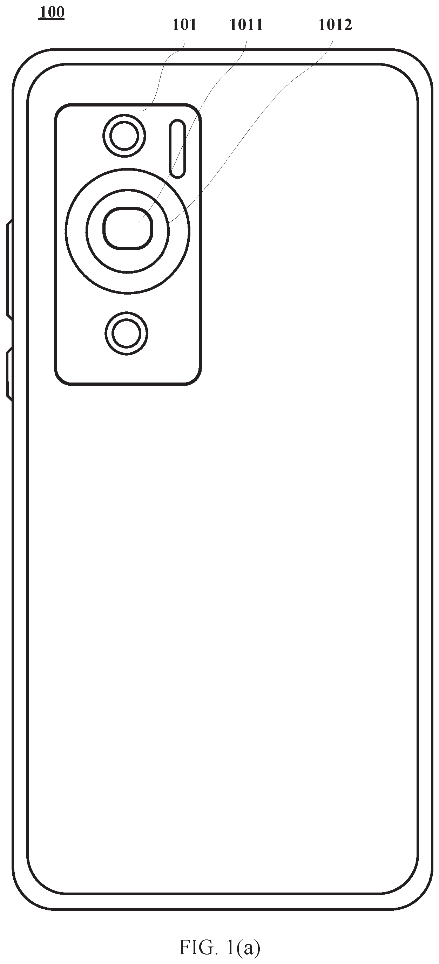

Refer to FIG. 1(a) to FIG. 1(d). FIG. 1(a) to FIG. 1(d) are diagrams of examples of a structure of a terminal device equipped with a lens module and diagrams of examples of scenarios in which a user uses the terminal device for photographing according to embodiments of this specification.

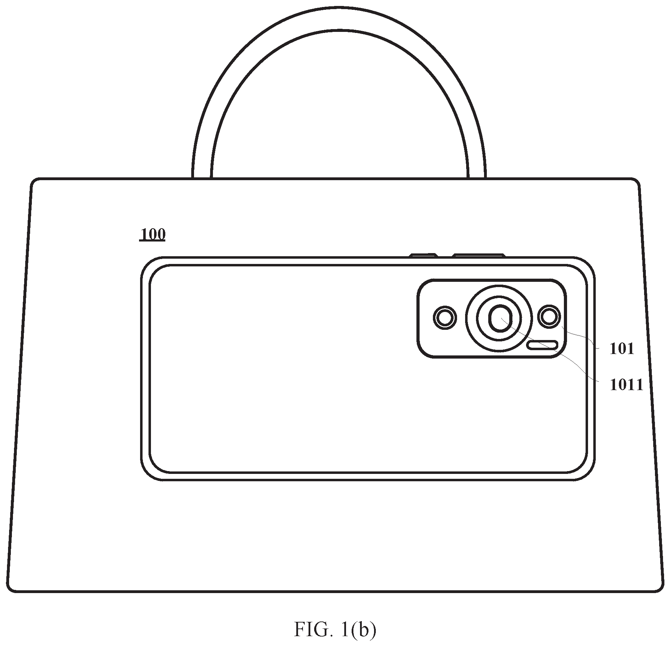

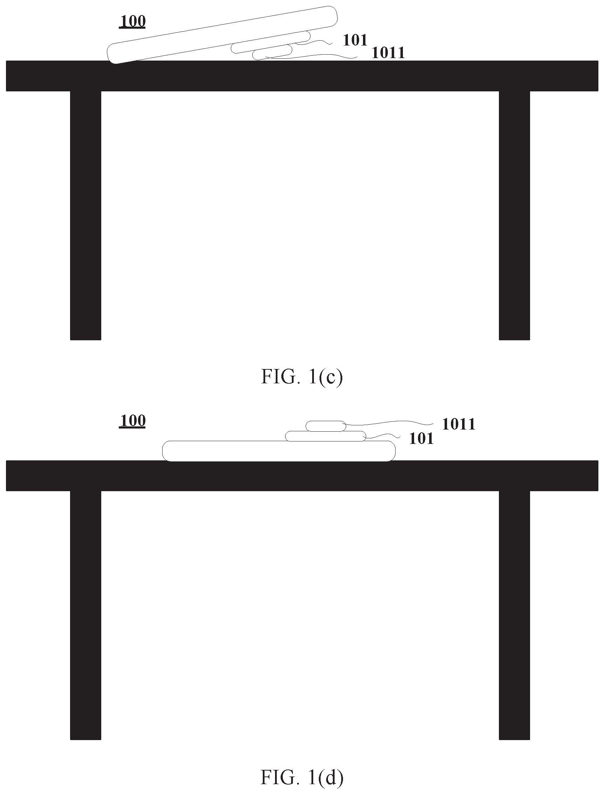

As shown in FIG. 1(a), the terminal device 100 is equipped with a lens module 101, and the lens module 101 includes a retractable lens 1011 and a lens extension and retraction mechanism 1012. It can be seen that, as shown in FIG. 1(b), in a process in which a user uses the terminal device 100 for photographing, the user puts the terminal device 100 in a pocket or a handbag without closing a photographing application. In this case, the retractable lens 1011 of the lens module 101 is still in an extended state. Consequently, the retractable lens 1011 directly undergoes compression or impact, affecting a service life of the retractable lens 1011. The extended state herein may indicate that the retractable lens 1011 is extended relative to a main body of the terminal device 100. For example, still refer to FIG. 1(b). The retractable lens 1011 is extended relative to the lens module 101 on a back surface of the body of the terminal device 100. In some embodiments, as shown in FIG. 1(c) and FIG. 1(d), the user places the lens module 101 facing up/down on a desktop without closing the photographing application. Consequently, the retractable lens 1011 collides with the desktop or another object, and affecting a service life of the retractable lens 1011.

To resolve a problem of damage to the retractable lens caused by the user directly placing the terminal device in a storage container when the retractable lens of the lens module of the terminal device is in an extended state, embodiments of this specification provide a control method. According to the control method, when it is detected that the lens module of the terminal device is in an operating state, that is, the retractable lens is in an extended state, a relative distance between the terminal device and a surrounding object in an environment is detected continuously based on a distance sensor of the terminal device. If the relative distance is in a distance range, the lens module is controlled to retract the retractable lens, so that the lens module exits the operating state, and the retractable lens of the lens module is in a retracted state. It may be understood that, relative to the extended state, the retracted state herein may indicate that the retractable lens is retracted relative to the main body of the terminal device 100, that is, the retractable lens 1011 retracts into the lens module 101 on the back surface of the body.

In this specification, that the relative distance between the terminal device and the surrounding object in the environment is in the distance range may indicate that a distance status between the terminal device and the surrounding object is a proximity state; and conversely, that the relative distance is outside the distance range may indicate that a distance status between the terminal device and the surrounding object is a distance state.

It can be learned that, according to the control method in embodiments of this specification, the terminal device may determine a distance status between the terminal device and a surrounding object based on a commonly configured distance sensor. Regardless of a placement posture (for example, facing up/down or being in a storage container) of the terminal device, if the surrounding object approaches the terminal device and the lens module is in an operating state, the lens module is controlled in time to exit the operating state. In this way, when the lens module of the terminal device is temporarily not being used by the user, the retractable lens and the lens extension and retraction mechanism of the lens module can be protected from damage, increasing a service life of the lens module, and enhancing user experience.

In an embodiment of this specification, the distance status between the terminal device and the surrounding object in the environment may be detected in the following manner: The terminal device controls the distance sensor to send a detection signal, calculates a relative distance between the terminal device and the surrounding object in the environment based on a time point at which the terminal device sends the detection signal, a time point at which a returned signal corresponding to the detection signal is received, and a signal propagation speed, and determines the distance status based on a comparison result between the relative distance and a distance threshold (preset distance). For example, if the relative distance is less than the distance threshold (the relative distance is in the distance range), the distance status is determined as a proximity state; or if the relative distance is greater than or equal to the distance threshold (the relative distance is outside the distance range), the distance status is determined as a distance state.

In an embodiment of this specification, the distance status between the terminal device and the surrounding object in the environment may be further detected in the following manner: The terminal device controls the distance sensor to send a detection signal, and determines, based on a time point at which the distance sensor sends the detection signal and a time point at which a returned signal corresponding to the detection signal is received, the distance status as a proximity state if a time difference between the two time points is less than a preset time period, or determines the distance status as a distance state if a time difference between the two time points exceeds the preset time period.

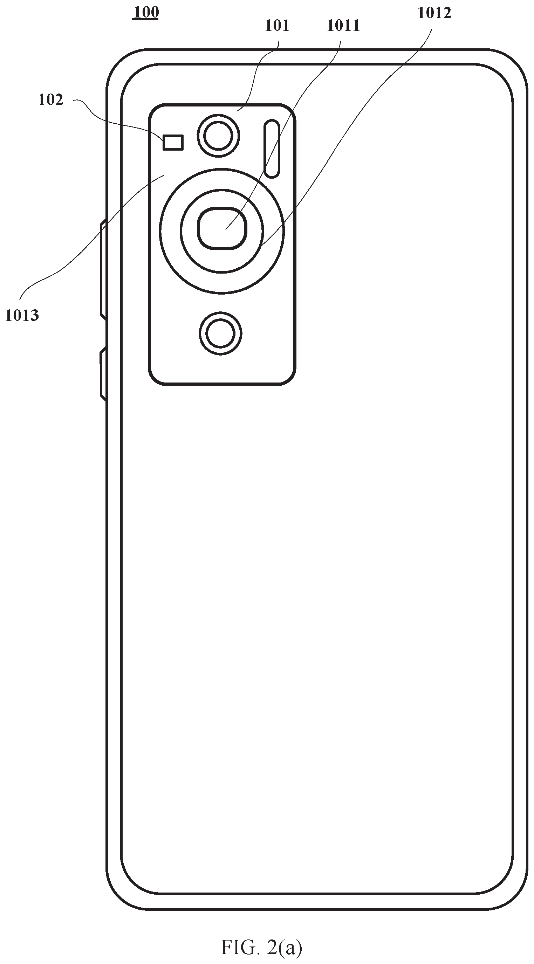

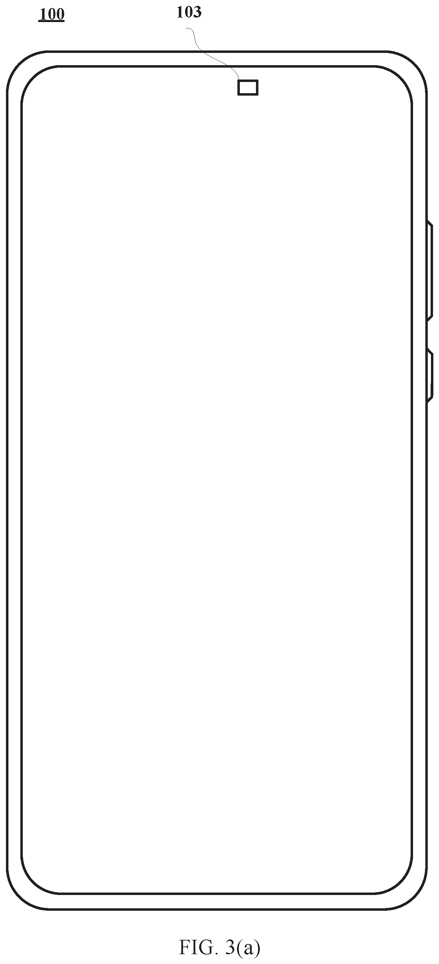

Refer to FIG. 2(a) to FIG. 2(c) below. FIG. 3(a) to FIG. 3(c) are diagrams of examples of a structure of a terminal device equipped with a lens module and a distance sensor according to an embodiment of this specification.

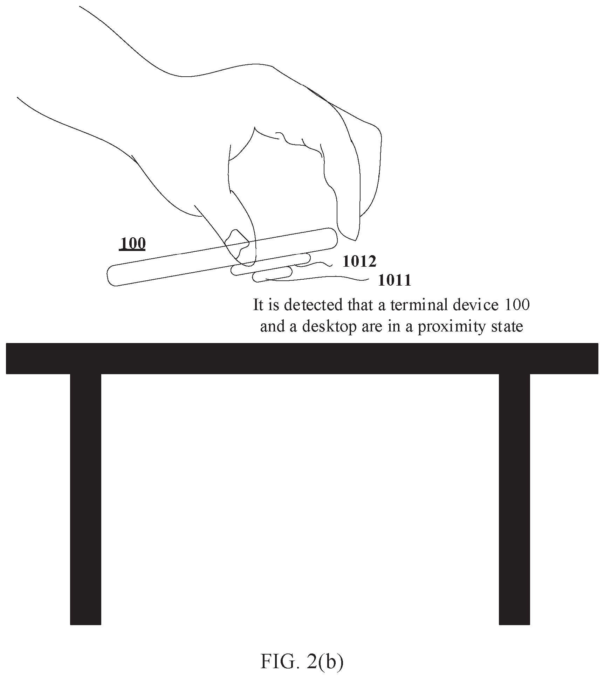

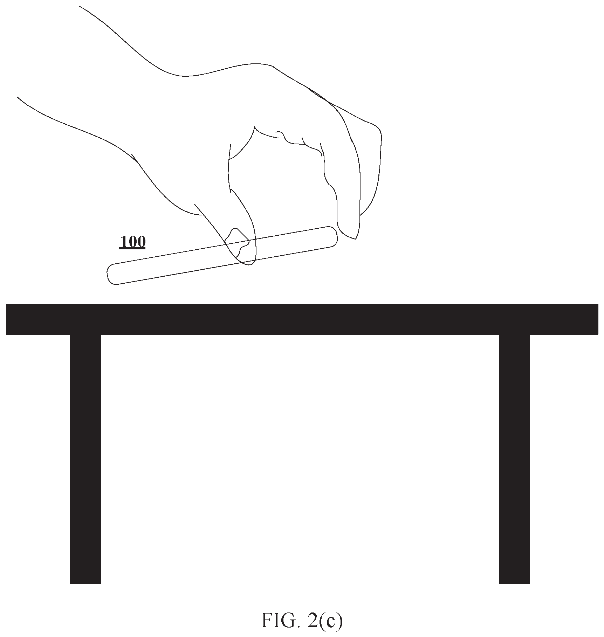

As shown in FIG. 2(a), the terminal device 100 is equipped with a lens module 101, and the lens module 101 includes a retractable lens 1011 and a lens extension and retraction mechanism 1012. The terminal device 100 is further equipped with a distance sensor 102, and the distance sensor 102 may be configured at a position close to the lens module 101. For example, the distance sensor 102 may be configured on an outer side of the lens module 101. In some embodiments, the position of the distance sensor 102 may be on a decorating part 1013 of the lens module 101, and the decorating part 1013 may include a protective cover of the lens module 101, an outer shell, and the like. An orientation of a light emission aperture of the distance sensor 102 is the same as an orientation of a light entrance aperture of the lens module 101. The light emission aperture of the distance sensor 102 may be provided to emit an optical signal and receive a returned optical signal. The light entrance aperture of the lens module 101 may be provided to collect an image signal. The distance sensor 102 (which may be referred to as a first distance sensor) herein may include an optical distance sensor, an infrared distance sensor, an ultrasonic distance sensor, and the like. For example, the distance sensor 102 is an infrared distance sensor. The distance sensor 102 includes an infrared emitter and an infrared receiver. When an infrared ray emitted by the infrared emitter is received by the infrared receiver in a preset time period, the terminal device 100 and a surrounding object are close to each other, that is, in a proximity state. When the infrared receiver receives an infrared ray emitted by the infrared emitter after the preset time period, or when the infrared receiver does not receive an infrared ray emitted by the infrared emitter, the terminal device 100 and a surrounding object are far away from each other. As shown in FIG. 2(b), in a process in which a user uses the terminal device 100 for photographing, the user places the terminal device 100 on a desktop with the lens module 101 down without closing a photographing application. When the terminal device 100 detects, by using the distance sensor 102, that a distance status between the terminal device 100 and the desktop is a proximity state, that is, the terminal device 100 and the desktop are close to each other, as shown in FIG. 2(c), the terminal device 100 may control the lens module 101 to exit an operating state, that is, control the lens extension and retraction mechanism 1012 of the lens module 101 to retract the retractable lens 1011.

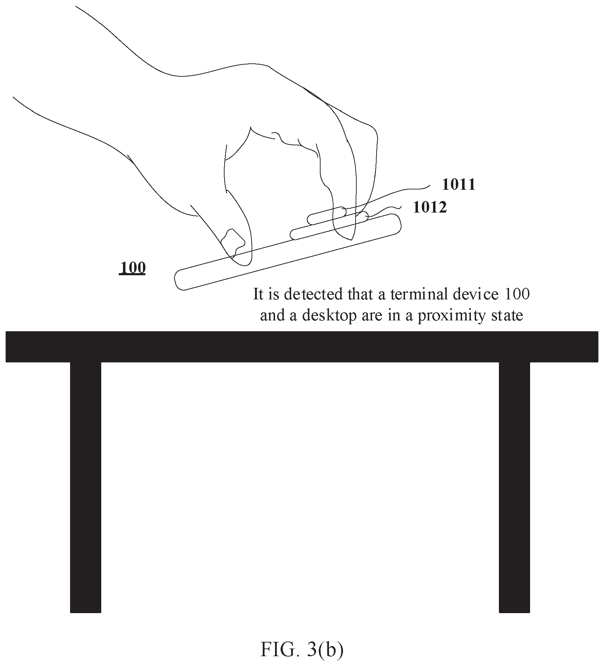

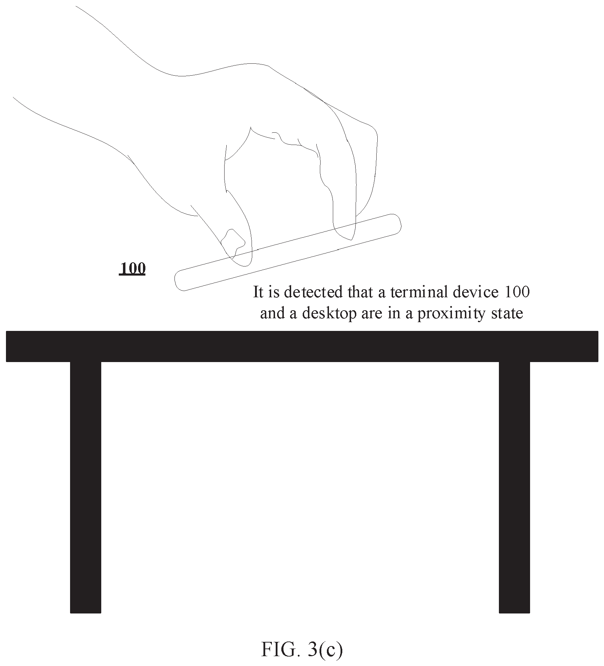

In some embodiments, as shown in FIG. 3(a), a distance sensor 103 of the terminal device 100 may be configured at a position on a front surface of the terminal device 100 (a surface of a viewfinder frame displayed on a display). In other words, an orientation of a light emission surface of the display of the terminal device 100 is opposite to an orientation of the light entrance aperture of the lens module 101, and an orientation of a light emission aperture of the distance sensor 103 is the same as the orientation of the light emission surface of the display of the terminal device 100. As shown in FIG. 3(b), in a process in which a user uses the terminal device 100 for photographing, the user places the terminal device 100 on a desktop with the lens module 101 up without closing a photographing application. When the terminal device 100 detects, by using the distance sensor 103 (which may be referred to as a second distance sensor), that a distance status between the terminal device 100 and the desktop is a proximity state, that is, the terminal device 100 and the desktop are close to each other, as shown in FIG. 3(c), the terminal device 100 may control the lens module 101 to exit an operating state, that is, control the lens extension and retraction mechanism 1012 of the lens module 101 to retract the retractable lens 1011.

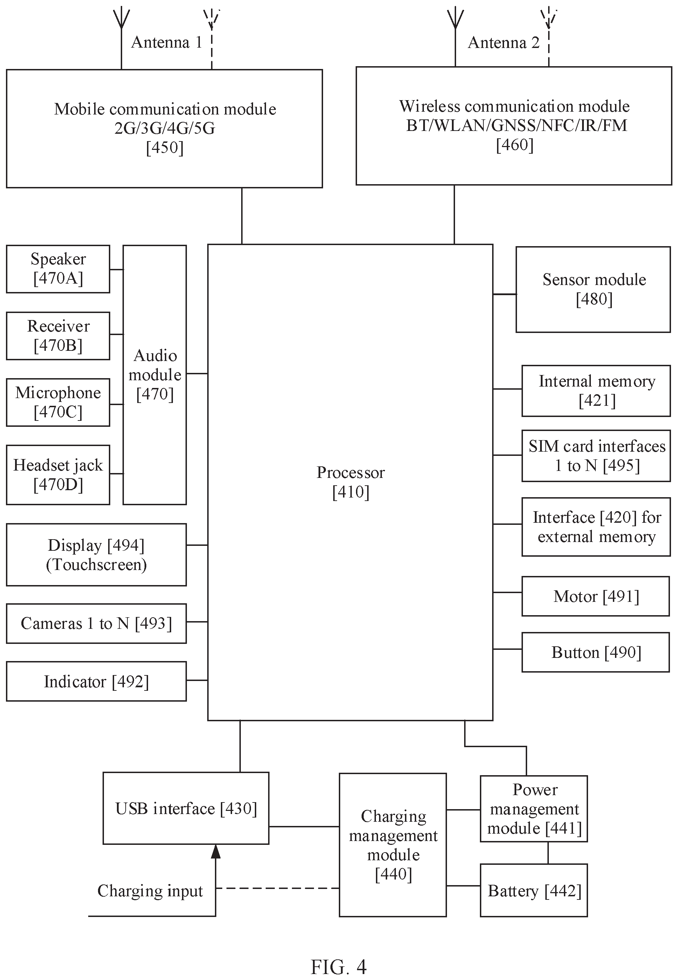

FIG. 4 is a diagram of a structure of a terminal device according to an embodiment of this specification. As shown in FIG. 4, the terminal device (such as a mobile phone or a tablet computer) may include a processor 410, an interface 420 for external memory, an internal memory 421, a universal serial bus (universal serial bus, USB) interface 430, a charging management module 440, a power management module 441, a battery 442, an antenna 1, an antenna 2, a mobile communication module 450, a wireless communication module 460, an audio module 470, a speaker 470A, a receiver 470B, a microphone 470C, a headset jack 470D, a sensor module 480, a button 490, a motor 491, an indicator 492, a camera 493, a display 494, a subscriber identity module (subscriber identity module, SIM) card interface 495, and the like.

The sensor module 480 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, and another sensor.

It may be understood that the structure shown in this embodiment does not constitute a specific limitation on the terminal device. In some other embodiments, the terminal device may include more or fewer components than those shown in the figure, or some components may be combined, or some components may be split, or different component arrangements may be used. The components shown in the figure may be implemented by hardware, software, or a combination of software and hardware.

The processor 410 may include one or more processing units. For example, the processor 410 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

A memory may be further disposed in the processor 410, and is configured to store instructions and data. In some embodiments, the memory in the processor 410 is a cache. The memory can store instructions or data that has just been used or is cyclically used by the processor 410. If the processor 410 needs to use the instructions or data again, the processor may directly call the instructions or data from the memory. This avoids repeated access and reduces waiting time of the processor 410, thereby improving system efficiency.

In some embodiments, the processor 410 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

In some embodiments, the processor 410 is configured to perform the control method in this specification. When the camera 493 is in an operating state, a distance status between the terminal device and a surrounding object is detected. If the terminal device and the surrounding object are in a proximity state, the camera 493 is controlled to exit the operating state.

It may be understood that an interface connection relationship between the modules shown in this embodiment is merely used as an example for description, and does not constitute a limitation on the structure of the terminal device. In some other embodiments, the terminal device may alternatively use an interface connection manner different from that in the foregoing embodiment, or use a combination of a plurality of interface connection manners.

The terminal device implements a display function by using the GPU, the display 494, the application processor, and the like. The GPU is a microprocessor for image processing, and is connected to the display 494 and the application processor. The GPU is configured to perform mathematical and geometric calculations, and is configured for graphics rendering. The processor 410 may include one or more GPUs that execute program instructions to generate or change display information.

The display 494 is configured to display an image, a video, and the like. The display 494 includes a display panel.

The terminal device may implement a photographing function by using the ISP, the camera 493, which may be referred to as a lens module, the video codec, the GPU, the display 494, the application processor, and the like. The ISP is configured to process data fed back from the camera 493. The camera 493 is configured to capture a static image or a video. In some embodiments, the terminal device may include one or N cameras 493, where N is a positive integer greater than 1.

The interface 420 for external memory may be configured to connect to an external storage card, for example, a micro SD card, to extend a storage capability of the terminal device. The external storage card communicates with the processor 410 through the interface 420 for external memory, to implement a data storage function. For example, files such as music and videos are stored in the external storage card.

The internal memory 421 may be configured to store computer-executable program code, where the executable program code includes instructions. The processor 410 runs the instructions stored in the internal memory 421, to perform various function applications and data processing of the terminal device. For example, in an embodiment of this specification, the processor 410 may execute the instructions stored in the internal memory 421. The internal memory 421 may include a program storage area and a data storage area.

The program storage area may store an operating system, an application required by at least one function (such as a sound playing function or an image playing function), and the like. The data storage area may store data (such as audio data and a phone book) created in a process of using the terminal device. In addition, the internal memory 421 may include a high-speed random access memory, and may further include a nonvolatile memory, for example, at least one magnetic disk storage device, a flash memory, or a universal flash storage (universal flash storage, UFS).

It may be understood that the structure shown in this embodiment of this specification does not constitute a specific limitation on the terminal device. In some other embodiments of this specification, the terminal device may include more or fewer components than those shown in the figure, or some components may be combined, or some components may be split, or different component arrangements may be used. The components shown in the figure may be implemented by hardware, software, or a combination of software and hardware.

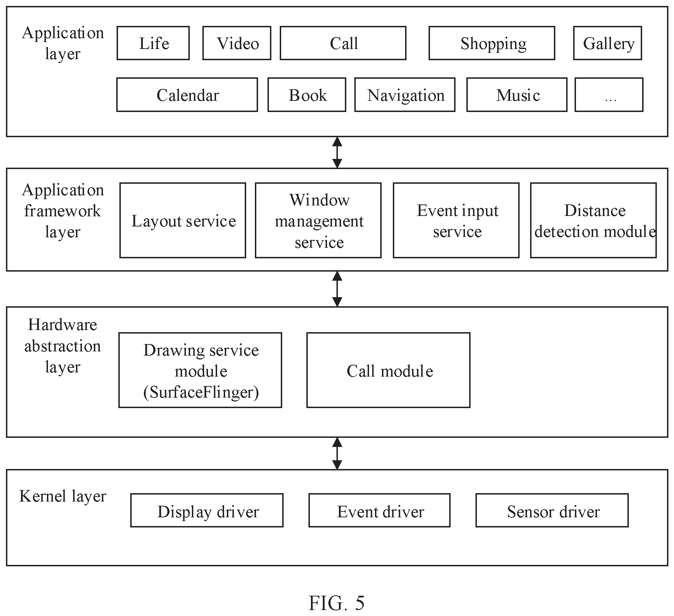

FIG. 5 is a block diagram of a software structure of a terminal device according to this specification.

In a layered architecture, software is divided into several layers, and each layer has a clear role and task. The layers communicate with each other through a software interface. In some embodiments, an Android system is divided into four layers: an application layer, an application framework layer, Android runtime (Android runtime) and system library, and a kernel layer from top to bottom.

As shown in FIG. 5, the application layer may include applications such as Life, Video, Book, Shopping, Gallery, Calendar, Call, Navigation, and Music. It may be understood that the application herein may be an application or service that has been installed in the terminal device, or an application or service that has not been installed in the terminal device but retrieved by using a fast service center.

The application framework layer may include a layout service, a window management service, an event input service, a distance detection module, and the like. The layout service is for determining a location of each display element in a display of the terminal device. The event input service is for changing display content in the display of the terminal device in response to an operation performed by a user on the terminal device. The window management service is for obtaining properties of a window corresponding to an application. The distance detection module is configured to detect a distance status between the terminal device and a surrounding object, that is, a distance between the terminal device and the surrounding object.

A hardware abstraction layer may include a drawing service module (SurfaceFlinger), a call module, and the like. The drawing service module (SurfaceFlinger) is configured to draw and composite one or more layers in a window of one or more applications, to obtain frame data. The call module may be configured for transfer of a received incoming call message to a call processing module, processing and transfer of a received hang-up message, and the like.

The kernel layer includes a display driver, an event driver, a sensor driver, and the like.

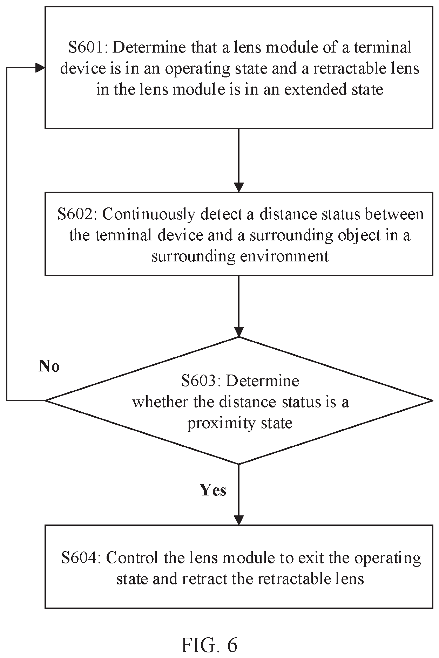

The following describes in detail, based on a schematic flowchart of a method shown in FIG. 6, the control method provided in embodiments of this specification. The method shown in FIG. 6 may be implemented by a processor of a terminal device executing related instructions.

As shown in FIG. 6, the control method may include the following steps.

S601: Determine that a lens module of a terminal device is in an operating state and a retractable lens in the lens module is in an extended state.

For example, the terminal device herein may be the terminal device 100 shown in FIG. 3(a), and the distance sensor 103 of the terminal device 100 may be configured at a position on a front surface of the terminal device 100. A user may be using the terminal device to take a photo. In this case, the lens module is in the operating state, and the retractable lens in the lens module is in the extended state.

In some embodiments, a method for determining that the lens module of the terminal device is in the operating state and the retractable lens in the lens module is in the extended state may further include: determining that the terminal device is running an application that needs to use the lens module, such as a photographing application, a video recording application, or a live streaming application.

S602: Continuously detect a distance status between the terminal device and a surrounding object in a surrounding environment.

For example, the distance status herein may include a proximity state and a distance state. A relative distance between the terminal device and the surrounding object is detected by using the distance sensor. If the relative distance is in a distance range, it may be determined that the terminal device and the surrounding object are in a proximity state. If the relative distance is outside the distance range, it may be determined that the terminal device and the surrounding object are in a distance state.

In this specification, a comparison result between the distance range and the relative distance between the terminal device and the surrounding object may be determined based on a comparison result between the relative distance and a distance threshold. Assuming that a configured distance threshold corresponding to the proximity state is 0.6 cm, when the distance sensor detects that the relative distance between the terminal device and the surrounding object is less than or equal to (≤) 0.6 cm, the distance status is determined as the proximity state. On the contrary, when the relative distance is greater than (>) 0.6 cm, the distance status is the distance state. The distance threshold herein is not fixed, and any distance threshold may be configured, such as 0.6 cm or 2 cm. This is not specifically limited in this specification.

S603: Determine whether the distance status is a proximity state.

For example, if the distance status is the proximity state, step S604 is performed to control the lens module to exit the operating state. If the distance status is not the proximity state, return to step S601 to control the lens module to remain in the operating state.

In some embodiments, if it is detected by using the distance sensor that the distance status between the terminal device and the surrounding object is the proximity state, the lens module is controlled to exit the operating state, that is, a lens extension and retraction mechanism of the lens module is controlled to retract the retractable lens.

S604: Control the lens module to exit the operating state and retract the retractable lens.

For example, still refer to FIG. 3(a). The terminal device may control the lens module 101 to exit the operating state, that is, control the lens extension and retraction mechanism 1012 of the lens module 101 to retract the retractable lens 1011. Specifically, for the terminal device equipped with the lens module 101 including the retractable lens 1011 with the lens extension and retraction mechanism 1012, when the lens module 101 is in the operating state, the retractable lens 1011 is in an extended state; and when the lens module 101 is controlled to exit the operating state, the retractable lens 1011 is in a retracted state.

It can be learned that, according to the control method shown in FIG. 6 and the structure of the terminal device 100 shown in FIG. 3(a), by using the distance sensor 103 configured on the front surface (the surface of the viewfinder frame) of the terminal device, the distance status between the terminal device and the surrounding object can be detected, including the proximity state or the distance state. When the lens module of the terminal device is in the operating state, that is, when the retractable lens is in the extended state, the user directly places the terminal device in a pocket/handbag, or puts the front surface (the surface of the viewfinder frame) of the terminal device downward, or places the terminal device with the front surface down on a desktop. To be specific, when the terminal device is temporarily not being used by the user, the terminal device may automatically retract the retractable lens in response to a case in which the distance sensor detects that the terminal device and the surrounding object in the surrounding environment are in the proximity state, that is, the terminal device detects that the lens module is approaching an inner side of the pocket/handbag or detects that the front surface (the display) of the terminal device is approaching the desktop, to protect the retractable lens and the lens extension and retraction mechanism from damage or ingress of foreign matter.

In some embodiments, according to the control method shown in FIG. 6 and the structure of the terminal device 100 shown in FIG. 2(a), by using the distance sensor 102 that is configured on the back surface of the terminal device 100 and that is close to the lens module 101, the distance status between the terminal device and the surrounding object can be detected, including the proximity state or the distance state. When the lens module of the terminal device is in the operating state, that is, when the retractable lens is in the extended state, the user puts the lens module of the terminal device downward or places the terminal device with the lens module down on a desktop, or the user holds and covers the lens module. To be specific, when the terminal device is temporarily not being used by the user, the terminal device may automatically retract the retractable lens in response to a case in which the distance sensor detects that the terminal device and the surrounding object in the surrounding environment are in the proximity state, that is, the terminal device detects that the lens module is approaching the desktop or detects that the lens module is approaching a palm of the user, to protect the retractable lens and the lens extension and retraction mechanism from damage or ingress of foreign matter.

In some embodiments, for the control method described in FIG. 6, in a process of continuously detecting the distance status between the terminal device and the surrounding object in the surrounding environment, if it is determined that the terminal device and the surrounding object are in the proximity state, whether duration in which the terminal device and the surrounding object remain in the proximity state exceeds a duration threshold (preset duration) may be further determined based on the specified duration threshold, that is, whether the duration in which the distance between the surrounding object and the terminal device remains less than the distance threshold exceeds the duration threshold may be further determined. If the duration exceeds the duration threshold, the lens module is controlled to exit the operating state and retract the retractable lens. If the duration does not exceed the duration threshold, the retractable lens remains extended. For example, the distance threshold corresponding to the proximity state is 0.6 cm, and the duration threshold corresponding to the proximity state is 3s. If it is detected that a relative distance between the terminal device and the surrounding object is less than or equal to (≤) 0.6 cm and the proximity state remains for 3s or more, that is, it is determined that duration in which the terminal device and the surrounding object remain in the proximity state is long, the lens module is controlled to exit the operating state, that is, the lens extension and retraction mechanism of the lens module is controlled to retract the retractable lens. If it is detected that a relative distance between the terminal device and the surrounding object is greater than 0.6 cm or the proximity state remains within 3s, the lens module remains in the operating state. The duration threshold herein is not fixed, and any duration threshold may be configured, such as 3s or 5s. This is not specifically limited in this specification.

Therefore, whether the terminal device and the surrounding object remaining in the proximity state meets the duration threshold is determined. In this way, when the lens module of the terminal device is in the operating state, the lens module can be prevented from exiting the operating state due to an accidental touch operation on the terminal device, for example, the user temporarily holds and covers the lens module, avoiding impact on normal use of the user.

It should be understood that although terms such as "first" and "second" may be used herein to describe various features, these features should not be limited by these terms. These terms are merely used for distinction, and shall not be understood as an indication or implication of relative importance. For example, without departing from the scope of example embodiments, a first feature may be referred to as a second feature, and similarly the second feature may be referred to as the first feature.

Furthermore, various operations are described as a plurality of separate operations in a manner that is most conducive to understanding illustrative embodiments. However, a described order should not be construed as implying that these operations need to depend on the described order. A plurality of these operations may be performed in parallel, concurrently, or simultaneously. In addition, the order of the operations may also be rearranged. The processing may be terminated when the described operations are completed, but may also have additional operations not included in the figures. The processing may correspond to a method, a function, a procedure, a subroutine, a subprogram, or the like.

References to "an embodiment", "embodiments", "an illustrative embodiment", and the like in the specification indicate that the described embodiment may include a specific feature, structure, or property, but each embodiment may or may not necessarily include the specific feature, structure, or property. In addition, these phrases are not necessarily intended for a same embodiment. In addition, when specific features are described with reference to specific embodiments, knowledge of a person skilled in the art can affect combination of these features with other embodiments, regardless of whether these embodiments are explicitly described.

Unless otherwise stated, terms "comprise", "have", and "include" are synonyms. The phrase "A/B" indicates "A or B". The phrase "A and/or B" indicates "(A), (B), or (A and B)".

As used herein, the term "module" may mean to be a part thereof, or include: a memory (a shared memory, a dedicated memory, or a group memory) for running one or more software or firmware programs, an application-specific integrated circuit (ASIC), an electronic circuit and/or a processor (a shared processor, a dedicated processor, or a group processor), a combined logic circuit, and/or another appropriate component that provides the function.

In the accompanying drawings, some structure or method features may be shown in a specific arrangement and/or order. However, it should be understood that such a specific arrangement and/or order is not necessary. In some embodiments, these features may be described in a manner and/or order different from that shown in the descriptive accompanying drawings. In addition, structure or method features included in a specific figure do not mean that all embodiments need to include such features. In some embodiments, these features may not be included, or these features may be combined with other features.

The foregoing has described embodiments of this specification in detail with reference to the accompanying drawings. However, use of the technical solutions of this specification is not limited to the various applications mentioned in embodiments of this patent, and various structures and variations may be easily implemented with reference to the technical solutions of this specification, to achieve various beneficial effects mentioned herein. Any variation made within the scope of knowledge possessed by a person of ordinary skill in the art without departing from the purpose of this specification shall fall within the scope of this specification.

## Claims

1. A method, applicable to an electronic device, wherein the electronic device comprises a lens module, and the lens module is located on a first side surface of the electronic device; and
the method comprises:
receiving, by the electronic device, a first input when a retractable lens of the lens module is in a retracted state;
switching, in response to the first input, the retractable lens of the lens module from the retracted state to an extended state; and
when the retractable lens of the lens module is in the extended state, controlling, in response to a distance between a first object and the electronic device being less than a preset distance, the retractable lens of the lens module to switch from the extended state to the retracted state.

2. The method according to claim 1, wherein in response to the distance between the first object and the electronic device being less than the preset distance comprises: in response to duration in which the distance between the first object and the electronic device is less than the preset distance exceeding preset duration.

3. The method according to claim 1, wherein the electronic device comprises a first distance sensor, a light emission aperture of the first distance sensor is located on a decorating part of the lens module, and an orientation of the light emission aperture of the first distance sensor is the same as an orientation of a light entrance aperture of the lens module; and the method further comprises:
determining, by using the first distance sensor, that the distance between the first object and the electronic device is less than a first preset distance.

4. The method according to any one of claims 1 to 3, wherein the electronic device further comprises a display and a second distance sensor, an orientation of a light emission surface of the display is opposite to the orientation of the light entrance aperture of the lens module, and an orientation of a light emission aperture of the second distance sensor is the same as the orientation of the light emission surface of the display; and the method further comprises:
determining, by using the second distance sensor, that the distance between the first object and the electronic device is less than a second preset distance.

5. A computer-readable storage medium, comprising instructions, wherein when the instructions are executed on an electronic device, the electronic device is enabled to perform the method according to any one of claims 1 to 4.

6. An electronic device, comprising:
a lens module, wherein the lens module comprises a retractable lens;
a memory, configured to store instructions to be executed by one or more processors of the electronic device; and
a processor, one of the processors of the electronic device, configured to perform the method according to any one of claims 1 to 4.

7. The electronic device according to claim 6, wherein the electronic device is a mobile phone.
